# EUROPEAN PATENT SPECIFICATION

(11) **EP 3 446 889 B1**
(45) Date of publication and mention of the grant of the patent: **07.06.2023**
(21) Application number: 18188345.5
(22) Date of filing: 09.08.2018
(51) Int. Cl.: B60C 11/03, B60C 11/12

(54) **A LOW NOISE TREAD FOR A PNEUMATIC TIRE**
GERÄUSCHARME LAUFFLÄCHE FÜR EINEN LUFTREIFEN
BANDE DE ROULEMENT À FAIBLE BRUIT POUR PNEUMATIQUE

(30) Priority: 23.08.2017 US 201715683801
(43) Date of publication of application: 27.02.2019
(73) Proprietor: The Goodyear Tire & Rubber Company, Akron, OH 44316 (US)
(72) Inventor: VAISSAUD, Julien Alexandre, B-6700 Arlon (BE)
(74) Representative: Kutsch, Bernd

(56) References cited:
- EP-A1- 0 958 152
- EP-A1- 3 130 482
- JP-A- 2003 300 403
- US-A- 2 094 636
- US-A- 2 696 863
- US-A- 2 708 957

## Description

### Field of Invention

The present invention relates to a pneumatic tire tread having improved acoustic characteristics.

### Background of the Invention

Conventionally, in addition to circumferential main grooves and lateral grooves, pneumatic tire treads may have sipes on a tread surface in order to demonstrate favorable functional characteristics (e.g., low rolling resistance, good traction, good durability, etc.).

JP-A-2003-300403 describes a tire tread having three circumferential grooves and four circumferential ribs. The two center ribs have circumferentially extending incisions having a depth in a range of from 2 to 7.5 mm and a width of 0.5 mm. The number of circumferential incisions extending in parallel in one embodiment is three and in another embodiment is five per rib.

US-A-2,696,863 describes a tire tread having six circumferential grooves and seven circumferential ribs. The shoulder ribs comprise a plurality of circumferentially extending relatively shallow and closely spaced slits forming thin or narrow laminations. The slits are made without removing any rubber from the tire and without materially changing the appearance of the tread surface in the slit area.

EP-A-3 130 482 describes a tire for use on a passenger vehicle. The tread has three circumferential grooves and four circumferential ribs. In each of the shoulder ribs, a row of circumferentially extended interrupted sipes may be provided.

WO-A-97/21556 describes a winter tire with improved performance on ice having circumferentially oriented wavy sipes in the shoulder blocks. The shoulder blocks are separated by lateral grooves.

US 2,094,636 discloses a tire with improved tread wear having a plurality of circumferentially extending slits in the shoulder ribs. The shoulder ribs also comprise laterally extending blind grooves on either side of each shoulder rib.

US 2,708,957 describes a tire having improved road grip. The tire has a plurality of circumferentially extending slits in the shoulder ribs crossed by spaced laterally extending slits.

### Definitions

The following definitions are controlling for the disclosed invention.

"Axial" and "Axially" means the lines or directions that are parallel to the axis of rotation of the tire.

"Axially Inward" means in an axial direction toward the equatorial plane.

"Axially Outward" means in an axial direction away from the equatorial plane.

"Circumferential" means circular lines or directions extending along the perimeter of the surface of the annular tread perpendicular to the axial direction.

"dBA" means A-weighted decibels, abbreviated dBA, or dBa, or dB(a), which are an expression of the relative loudness of sounds in air as perceived by the human ear. In the A-weighted system, the decibel of sounds at low frequencies are reduced, compared with unweighted decibels, in which no correction is made for audio frequency. This correction is made because the human ear is less sensitive at low audio frequencies, especially below 1000 Hertz, than at high audio frequencies.

"Directional Tread Pattern" means a tread pattern designed for specific direction of rotation.

"Equatorial Plane" means the plane perpendicular to the tire's axis of rotation and passing through the center of its tread; or the plane containing the circumferential centerline of the tread.

"Footprint" means the contact patch or area of contact of the tire tread with a flat surface under normal load pressure and speed conditions.

"Groove" means an elongated void area in a tread that may extend circumferentially or laterally in the tread in a straight, curved or zigzag manner. It is understood that all groove widths are measured perpendicular to the centerline of the groove.

"Hertz" means number of cycles per second.

"Lateral" means a direction going from one sidewall of the tire towards the other sidewall of the tire.

"Radial" and "radially" mean directions radially toward or away from the axis of rotation of the tire.

"Sipe" means a groove having a width in the range of 0.2 percent to 0.8 percent of the tread width. Sipes are typically formed by steel blades having a 0.4 to 1.6 mm, inserted into a cast or machined mold.

"Tangential" and "Tangentially" refer to segments of circular curves that intersect at a point through which can be drawn a single line that is mutually tangential to both circular segments.

"Tread" means the ground contacting portion of a tire.

### Summary of the Invention

The invention relates to a tread in accordance with claim 1 and to a tire in accordance with claim 12.

Dependent claims refer to preferred embodiments of the invention.

A tread for a tire according to the present invention includes a first circumferential groove extending in a circumferential direction of the pneumatic tire, a second circumferential groove extending in the circumferential direction of the pneumatic tire, a third circumferential groove extending in the circumferential direction of the pneumatic tire, and a fourth circumferential groove extending in the circumferential direction of the pneumatic tire. The first, second, third, and fourth circumferential grooves defining first, second, third, fourth, and fifth ribs. The first and fifth ribs include lateral grooves and incisions extending circumferentially fully around the first and fifth ribs. The incisions of the first and fifth ribs reduce noise generated by the tread under operating conditions.

According to another preferred aspect of the tread, the first rib has between 6 and 12 incisions.

According to still another preferred aspect of the tread, the fifth rib has between 6 and 12 incisions.

According to yet another preferred aspect of the tread, the incisions of the first rib have a depth between 1.0 mm and 4.0 mm.

According to still another preferred aspect of the tread, the incisions of the fifth rib have a depth between 1.0 mm and 4.0 mm.

According to yet another preferred aspect of the tread, the incisions of the first rib have a lateral spacing between 1.0 mm and 6.0 mm.

According to still another preferred aspect of the tread, the incisions of the fifth rib have a lateral spacing between 1.0 mm and 6.0 mm.

The incisions of the first rib have a width between 0.8 mm to 1.2 mm.

The incisions of the fifth rib have a width between 0.8 mm to 1.2 mm.

According to yet another preferred aspect of the tread, the incisions of the first and fifth ribs have depths of 2.0 mm.

The incisions reduce noise generated by the tread under operating conditions. This applies in particular to the incisions in the first and fifth rib, but also to the incisions in the other ribs.

### Brief Description of the Drawings

The present invention will be more clearly understood by the following description of some examples thereof, with reference to the accompanying drawings, in which:
FIG. 1 is a schematic orthogonal front view of a pneumatic tire having a tread in accordance with an embodiment the present invention.
FIG. 2 is a schematic orthogonal detail view of the pneumatic tire and tread of FIG. 1.
FIG. 3 is a schematic sectional view of the pneumatic tire and tread pattern along line 3-3 in FIG.2.
FIG. 4 is a graph of ambient tire noise versus excitation frequency for three different treads.

### Description of Example Embodiments of the Present Invention

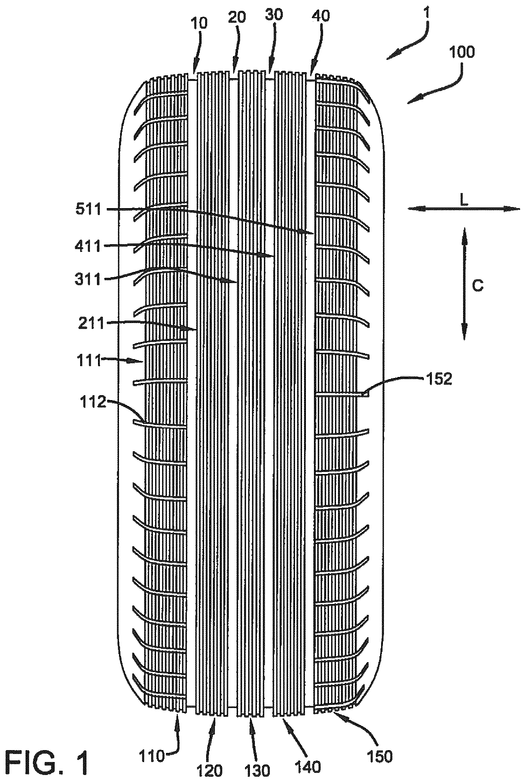

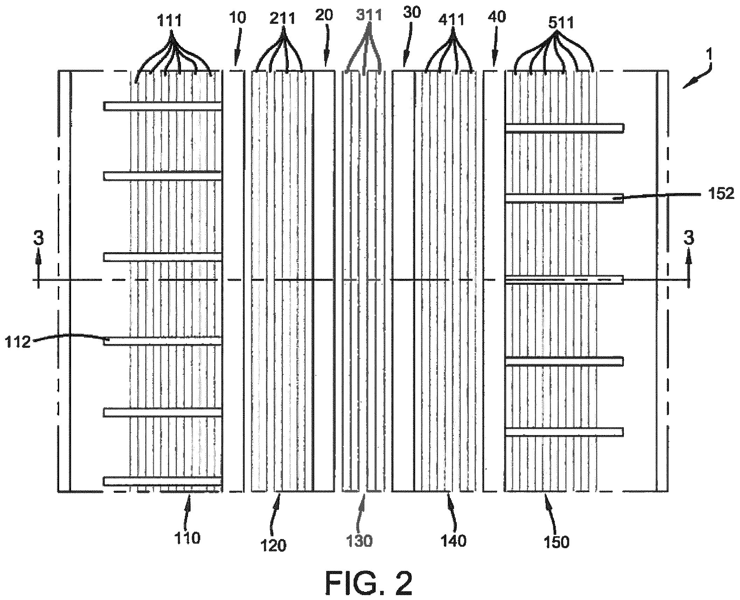

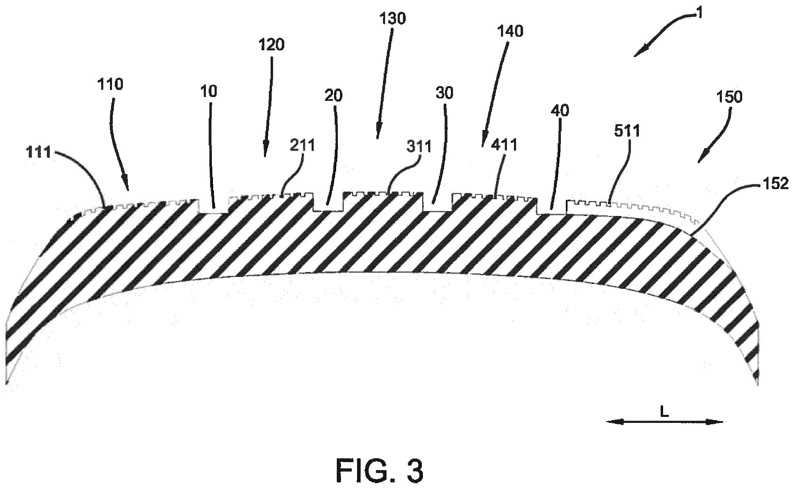

As shown in FIGS. 1-3, a pneumatic tire 1 in accordance with an embodiment of the present invention has a tread 100 with a first main circumferential groove 10, a second main circumferential groove 20, a third main circumferential groove 30, and a fourth main circumferential groove 40 all extending in a circumferential direction C of the pneumatic tire forming the tread 100. Five land portions, or ribs 110, 120, 130, 140, 150 are formed by these main circumferential grooves 10, 20, 30, 40. Each of the first and fifth ribs 110, 150 (i.e. the shoulder ribs or axially outermost ribs) have additional lateral grooves 112, 152 extending laterally across the ribs 110, 150 forming discreet and circumferentially repeating blocks, or tread elements.

The main circumferential grooves 10, 20, 30, 40 have, for example, a lateral width between 3.0 mm and 20.0 mm and an example radial depth between 5.0 mm and 13.0 mm.

In accordance with the present invention, the first shoulder rib 110 further has a plurality of circumferential incisions 111, or "zebra stripes", extending fully around the circumference of the first rib. These incisions 111 continue circumferentially through each of the lateral grooves 112. The number of incisions 111 may range from 2 to 12. The incisions 111 preferably have depths ranging from 1.0 mm to 4.0 mm, or about 2.0 mm. The incisions 111 have widths ranging from 0.8 mm to 1.2 mm. The incisions 111 preferably have a lateral spacing, incision edge to incision edge, ranging from 1.0 mm to 5.0 mm. Said another way, the incisions 111 are preferably separated by ribs between 1.0 mm and 4.0 mm. The depth, width, and lateral spacing of the incisions 111 all effect the amount of ambient noise mitigation produced by the incisions. Generally, 2.0 mm may be an optimal depth and a greater density of incisions 111 decreases noise more than a lesser density of incisions.

In accordance with a preferred embodiment the present invention, the second intermediate rib 120 further has a plurality of circumferential incisions 211, or "zebra stripes", extending fully around the circumference of the second rib. The number of incisions 211 preferably range from 2 to 12. The incisions 211 preferably have depths ranging from 1.0 mm to 4.0 mm, or about 2.0 mm. The incisions 211 preferably have widths ranging from 0.5 mm to 1.5 mm. The incisions 211 preferably have a lateral spacing, incision edge to incision edge, ranging from 1.0 mm to 6.0 mm. Said another way, the incisions 211 are preferably separated by ribs between 1.0 mm and 5.0 mm. The depth, width, and lateral spacing of the incisions 211 all effect the amount of ambient noise mitigation produced by the incisions. Generally, 2.0 mm may be an optimal depth and a greater density of incisions 211 decreases noise more than a lesser density of incisions.

In accordance with a preferred embodiment of the present invention, the third center rib 130 further has a plurality of circumferential incisions 311, or "zebra stripes", extending fully around the circumference of the third rib. The number of incisions 311 preferably range from 2 to 12. The incisions 311 preferably have depths ranging from 1.0 mm to 4.0 mm, or about 2.0 mm. The incisions 311 preferably have widths ranging from 0.5 mm to 1.5 mm. The incisions 311 preferably have a lateral spacing, incision edge to incision edge, ranging from 1.0 mm to 6.0 mm. Said another way, the incisions 311 are preferably separated by ribs between 1.0 mm and 5.0 mm. The depth, width, and lateral spacing of the incisions 311 preferably all effect the amount of ambient noise mitigation produced by the incisions. Generally, 2.0 mm may be an optimal depth and a greater density of incisions 311 decreases noise more than a lesser density of incisions.

In accordance with a preferred embodiment of the present invention, the fourth intermediate rib 140 further have a plurality of circumferential incisions 411, or "zebra stripes", extending fully around the circumference of the fourth rib. The number of incisions 411 preferably range from 2 to 12. The incisions 411 preferably have depths ranging from 1.0 mm to 4.0 mm, or about 2.0 mm. The incisions 411 preferably have widths ranging from 0.5 mm to 1.5 mm. The incisions 411 preferably have a lateral spacing, incision edge to incision edge, ranging from 1.0 mm to 6.0 mm. Said another way, the incisions 411 are preferably separated by ribs between 1.0 mm and 5.0 mm. The depth, width, and lateral spacing of the incisions 411 all effect the amount of ambient noise mitigation produced by the incisions. Generally, 2.0 mm may be an optimal depth and a greater density of incisions 411 decreases noise more than a lesser density of incisions.

In accordance with the present invention, the fifth shoulder rib 150 further has a plurality of circumferential incisions 511, or "zebra stripes", extending fully around the circumference of the fifth rib. These incisions 511 continue circumferentially through each of the lateral grooves 152. The number of incisions 511 preferably range from 2 to 12. The incisions 511 preferably have depths ranging from 1.0 mm to 4.0 mm, or about 2.0 mm. The incisions 511 have widths ranging from 0.8 mm to 1.2 mm. The incisions 511 preferably have a lateral spacing, incision edge to incision edge, ranging from 1.0 mm to 6.0 mm. Said another way, the incisions 511 are preferably separated by ribs between 1.0 mm and 5.0 mm. The depth, width, and lateral spacing of the incisions 511 all effect the amount of ambient noise mitigation produced by the incisions. Generally, 2.0 mm may be an optimal depth and a greater density of incisions 511 decreases noise more than a lesser density of incisions.

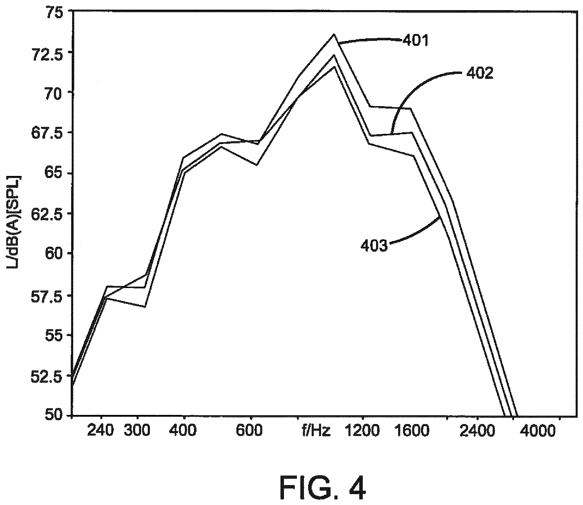

As can be seen in FIG. 4, a tread pattern 401 with no incisions produces more noise than the same tread pattern 402 having incisions 111, 511 only in the shoulder ribs 110, 150, as described above.

Further, the tread pattern 402 with incisions 111, 511 only in the shoulder ribs 110, 150 produces more noise than the same tread pattern 403 having incisions 111, 211, 311, 411, 511 in all five ribs 110, 120, 130, 140, 150, as described above.

These incisions 111, 211, 311, 411, 511 in each rib 110, 120, 130, 140, 150 (FIGS. 1-3) may reduce noise by as much as 1.4 dBA to 2.4 dBA at a tire speed of 50 kph. The incisions 111, 211, 311, 411, 511 have been shown to have little or no effect on rolling resistance of the tire 1 (e.g., +/- 2 percent, etc.).

## Claims

1. A tread for using with a tire (1), the tread (100) comprising a first circumferential groove (10), a second circumferential groove (20), a third circumferential groove (30) and a fourth circumferential groove (40), the first, second, third, and fourth circumferential grooves (10, 20, 30, 40) defining a first, a second, a third, a fourth and a fifth circumferential rib (110, 120, 130, 140, 150), wherein the first and the fifth circumferential rib (110, 150) are the axially outermost ribs with respect to the equatorial plane of the tread (100) or the tire (1) on which the tread (100) is configured to be used, **characterized by** the tread (100) further comprising a plurality of incisions (111, 511) extending circumferentially within and fully around the first circumferential rib (110) and a plurality of incisions (511) extending circumferentially within and fully around the fifth circumferential rib (150), wherein the incisions (111, 511) within the respective circumferential rib (110, 150) each have a width in a range of from 0.8 mm to 1.2 mm, and wherein the first and fifth circumferential rib (110, 150) include a plurality of lateral grooves (112, 152).

2. The tread of claim 1 comprising 2 to 12, alternatively 3 to 10 or 4 to 8, of said incisions (111, 511) in the first circumferential rib (110) and in the fifth circumferential rib (150).

3. The tread of claim 1 or 2, wherein the incisions (111, 511) extend in parallel.

4. The tread of at least one of the previous claims, wherein the incisions (111, 511) each have a depth in a range of from 1.0 mm to 4 mm, alternatively 1.0 mm to 3 mm.

5. The tread of at least one of the previous claims, wherein the incisions (111, 511) have a lateral spacing between two laterally adjacent incisions (111, 511) width in a range of from 0.5 to 6 mm, alternatively from 1 mm to 3 mm or 0.5 mm to 1.5 mm.

6. The tread of claim 1, wherein three or four of the first, third, fourth or fifth circumferential ribs (110, 130, 140, 150) comprise a plurality of incisions (111, 311, 411, 511) extending circumferentially within the respective circumferential rib (110, 130, 140, 150).

7. The tread of claim 6, wherein there are 2 to 12, alternatively 3 to 10 or 4 to 8, of said incisions (111, 311, 411, 511) within the respective circumferential rib (110, 130, 140, 150).

8. The tread of claim 6 or 7, wherein said incisions (111, 311, 411, 511) within the respective circumferential rib (110, 130, 140, 150) extend in parallel.

9. The tread of claim 6, 7 or 8, wherein said incisions (111, 311, 411, 511) within the respective circumferential rib (110, 130, 140, 150) each have a depth in a range of from 1.0 mm to 4 mm, alternatively 1.0 mm to 3 mm; and/or each have a width in a range of 0.8 to 1.2 mm.

10. The tread of claim 6, 7, 8 or 9, wherein said incisions (111, 311, 411, 511) within the respective circumferential rib (110, 130, 140, 150) have a lateral spacing between two laterally adjacent incisions (111, 311, 411, 511) width in a range of from 0.5 to 6 mm, alternatively from 1 mm to 3 mm or 0.5 mm to 1.5 mm.

11. The tread of claim 1 wherein the lateral grooves (112, 152) extend laterally across the ribs (110, 150) forming discreet and circumferentially repeating blocks or tread elements.

12. A pneumatic tire comprising a tread in accordance with at least one of the previous claims.

## Patentansprüche

1. Lauffläche zur Verwendung mit einem Reifen (1), wobei die Lauffläche (100) eine erste Umfangsnut (10), eine zweite Umfangsnut (20), eine dritte Umfangsnut (30) und eine vierte Umfangsnut (40) umfasst, wobei die erste, die zweite, die dritte und die vierte Umfangsnute (10, 20, 30, 40) eine erste, eine zweite, eine dritte, eine vierte und eine fünfte Umfangsrippe (110, 120, 130, 140, 150) definieren, wobei die erste und die fünfte Umfangsrippe (110, 150) die axial äußersten Rippen gegenüber der Äquatorialebene der Lauffläche (100) oder des Reifens sind (1), auf dem die Lauffläche (100) zur Verwendung konfiguriert ist, **dadurch gekennzeichnet dass**:
die Lauffläche (100) ferner eine Anzahl von Einschnitten (111, 511), die sich in Umfangsrichtung innerhalb und völlig um die erste Umfangsrippe (110) und eine Anzahl von Einschnitten (511) die sich in Umfangsrichtung innerhalb und völlig um die fünfte Umfangsrippe (150) erstrecken, umfasst, wobei die Einschnitte (111, 511) innerhalb der jeweiligen Umfangsrippe (110, 150) jeweils eine Breite in einem Bereich von 0,8 mm bis 1,2 mm haben und wobei die erste und die fünfte Umfangsrippe (110, 150) mehrere seitliche Nuten (112, 152) enthalten.

2. Lauffläche nach Anspruch 1, die 2 bis 12, alternativ 3 bis 10 oder 4 bis 8, dieser Einschnitte (111, 511) in der ersten Umfangsrippe (110) und in der fünften Umfangsrippe (150) umfasst.

3. Lauffläche nach Anspruch 1 oder 2, wobei die Einschnitte (111, 511) sich parallel erstrecken.

4. Lauffläche nach mindestens einem der vorhergehenden Ansprüche, wobei die Einschnitte (111, 511) jeweils eine Tiefe im Bereich von 1,0 mm bis 4 mm, alternativ von 1,0 mm bis 3 mm haben.

5. Lauffläche nach mindestens einem der vorhergehenden Ansprüche, wobei die Einschnitte (111, 511) einen seitlichen Abstand zwischen zwei seitlich benachbarten Einschnitten (111, 511) haben, der eine Breite in einem Bereich von 0,5 bis 6 mm, alternativ von 1 mm bis 3 mm oder 0,5 mm bis 1,5 mm aufweist.

6. Lauffläche nach Anspruch 1, wobei drei oder vier der ersten, der dritten, der vierten oder der fünften Umfangsrippe (110, 130, 140, 150) eine Anzahl von Einschnitten (111, 311, 411, 511) umfassen, die sich umfangsmäßig innerhalb der jeweiligen Umfangsrippe (110, 130, 140, 150) erstrecken.

7. Lauffläche nach Anspruch 6, wobei innerhalb der jeweiligen Umfangsrippe (110, 130, 140, 150) 2 bis 12, alternativ 3 bis 10 oder 4 bis 8 dieser Einschnitte (111, 311, 411, 511) vorhanden sind.

8. Lauffläche nach Anspruch 6 oder 7, wobei die Einschnitte (111, 311, 411, 511) sich innerhalb der jeweiligen Umfangsrippe (110, 130, 140, 150) parallel erstrecken.

9. Lauffläche nach Anspruch 6, 7 oder 8, wobei die Einschnitte (111, 311, 411, 511) innerhalb der jeweiligen Umfangsrippe (110, 130, 140, 150) jeweils eine Tiefe in einem Bereich von 1,0 mm bis 4 mm, alternativ 1,0 mm bis 3 mm haben; und/oder jeweils eine Breite in einem Bereich von 0,8 bis 1,2 mm haben.

10. Lauffläche nach Anspruch 6, 7, 8 oder 9, wobei die Einschnitte (111, 311, 411, 511) innerhalb der jeweiligen Umfangsrippe (110, 130, 140, 150) einen seitlichen Abstand zwischen zwei seitlich benachbarten Einschnitten (111, 311, 411, 511) haben, der eine Breite in einem Bereich von 0,5 bis 6 mm aufweisen, gegebenenfalls von 1 mm bis 3 mm oder 0,5 mm bis 1,5 mm aufweist.

11. Lauffläche nach Anspruch 1, wobei die seitlichen Nuten (112, 152) sich seitlich durch die Rippen (110, 150) erstrecken und diskrete und sich umlaufend wiederholende Blöcke oder Laufflächenelemente bilden.

12. Luftreifen, der eine Lauffläche gemäß mindestens einem der vorhergehenden Ansprüche umfasst.

## Revendications

1. Bande de roulement pour son utilisation avec un bandage pneumatique (1), la bande de roulement (100) comprenant une première rainure circonférentielle (10), une deuxième rainure circonférentielle (20), une troisième rainure circonférentielle (30) et une quatrième rainure circonférentielle (40), la première, la deuxième, troisième et la quatrième rainure circonférentielle (10, 20, 30, 40) définissant une première, une deuxième, une troisième, une quatrième et une cinquième nervure circonférentielle (110, 120, 130, 140, 150) ; dans laquelle la première et la cinquième nervure circonférentielle (110, 150) représentent les nervures les plus externes en direction radiale par rapport au plan équatorial de la bande de roulement (100) ou du bandage pneumatique (1) sur lequel la bande de roulement (100) est configurée pour être utilisée, **caractérisée par le fait que** la bande de roulement (100) comprend en outre plusieurs entailles (111,511) qui s'étendent dans la direction circonférentielle au sein et complètement autour de la première nervure circonférentielle (110) et plusieurs entailles (511) qui s'étendent dans la direction circonférentielle au sein et complètement autour de la cinquième nervure circonférentielle (150) ; dans lequel les entailles (111, 511), au sein de la nervure circonférentielle respective (110, 150) possèdent chacune une largeur qui se situe dans une plage allant de 0,8 mm à 1,2 mm ; et dans laquelle la première et la cinquième nervure circonférentielle (110, 150) englobent un certain nombre de rainures latérales (112, 152).

2. Bande de roulement selon la revendication 1, qui comprend de 2 à 12, en variante de 3 à 10 ou de 4 à 8 entailles parmi lesdites entailles (111,511) dans la première nervure circonférentielle (110) et dans la cinquième nervure circonférentielle (150).

3. Bande de roulement selon la revendication 1 ou 2, dans lequel les entailles (111, 511) s'étendent en parallèle.

4. Bande de roulement selon au moins une des revendications précédentes, dans lequel les entailles (111, 511) possèdent chacune une profondeur qui se situe dans une plage allant de 1,0 mm à 4 mm, en variante de 1,0 mm à 3 mm.

5. Bande de roulement selon au moins une des revendications précédentes, dans lequel les entailles (111,511) possèdent une largeur de l'écartement latéral entre deux entailles (111, 511) adjacentes en direction latérale qui se situe dans une plage allant de 0,5 à 6 mm, en variante de 1 mm à 3 mm ou de 0,5 mm à 1,5 mm.

6. Bande de roulement selon la revendication 1, dans laquelle trois ou quatre nervures parmi la première, la troisième, la quatrième ou la cinquième nervure circonférentielle (110, 130, 140, 150) comprennent un certain nombre d'entailles (111, 211, 311, 411) qui s'étendent en direction circonférentielle au sein de la nervure circonférentielle respective (110, 130, 140, 150).

7. Bande de roulement selon la revendication 6, dans laquelle on trouve de 2 à 12, en variante de 3 à 10 ou de 4 à 8 entailles parmi lesdites entailles (111, 311, 411, 511) au sein de la nervure circonférentielle respective (110, 130, 140, 150).

8. Bande de roulement selon la revendication 6 ou 7, dans laquelle lesdites entailles (111, 311, 411, 511) au sein de la nervure circonférentielle respective (110, 130, 140, 150) s'étendent en parallèle.

9. Bande de roulement selon la revendication 6, 7 ou 8, dans laquelle lesdites entailles (111, 311, 411, 511) au sein de la nervure circonférentielle respective (110, 130, 140, 150) possèdent chacune une profondeur qui se situe dans une plage allant de 1,0 mm à 4 mm, en variante de 1,0 mm à 3 mm ; et/ou possèdent chacune une largeur qui se situe dans une plage allant de 0,8 à 1,2 mm.

10. Bande de roulement selon la revendication 6, 7, 8 ou 9, dans laquelle lesdites entailles (111, 311, 411, 511) au sein de la nervure circonférentielle respective (110, 130, 140, 150) possèdent une largeur de l'écartement latéral entre deux entailles (111, 311, 411, 511) adjacentes en direction latérale qui se situe dans une plage allant de 0,5 à 6 mm, en variante de 1 mm à 3 mm ou de 0,5 mm à 1,5 mm.

11. Bande de roulement selon la revendication 1, dans laquelle les rainures latérales (112, 152) s'étendent en direction latérale à travers la nervure (110, 150) pour former des éléments de bande de roulement ou des blocs discrets et qui se répètent dans la direction circonférentielle.

12. Bandage pneumatique comprend une bande de roulement en conformité avec au moins une des revendications précédentes.
